# FASCICULE DE BREVET EUROPEEN

(11) **EP 1 776 224 B1**
(45) Date de publication et mention de la délivrance du brevet: **07.09.2016**
(21) Numéro de dépôt: 05778766.5
(22) Date de dépôt: 21.06.2005
(51) Int. Cl.: B29C 49/36, B29C 49/42

(54) **MACHINE TOURNANTE A COLONNE TOURNANTE D'ALIMENTATION ELECTRIQUE ET FLUIDIQUE**
VORRICHTUNG MIT DREHBARER STROM- UND FLUID-VERSORGUNGSSÄULE
ROTATING MACHINE PROVIDED WITH A ROTATING COLUMN FOR POWER AND FLUID SUPPLY

(30) Priorité: 28.06.2004 FR 0407077
(43) Date de publication de la demande: 25.04.2007
(73) Titulaire: SIDEL PARTICIPATIONS, 76930 Octeville-sur-Mer (FR)
(72) Inventeur: DANEL, Laurent, SIDEL, F-76930 Octeville-sur-mer (FR); ROBERT, Gilles, SIDEL, F-76930 Octeville-sur-mer (FR); SAVARY, Cyril, SIDEL, F-76930 Octeville-sur-mer (FR); MIE, Patrick, Sidel, F-76930 Octeville-sur-mer (FR)
(74) Mandataire: Siloret, Patrick
(86) Numéro de dépôt international: PCT/FR2005/001554
(87) Numéro de publication internationale: WO 2006/010807

(56) Documents cités:
- FR-E- 87 759
- US-A- 3 936 521
- US-A- 4 861 542

## Description

La présente invention concerne des perfectionnements apportés aux machines tournantes du type carrousel connu par US-A-4 861 542 et selon le préambule de la revendication 1.

On soulignera ici que l'invention vise plus particulièrement les machines tournantes de fabrication de récipients en matériau thermoplastique, notamment en PET, par soufflage ou étirage-soufflage d'une ébauche (préforme ou récipient intermédiaire) dans des moules supportés sur un bâti tournant, mais que l'invention peut trouver application dans des machines tournantes d'autres types telles que les remplisseuses.

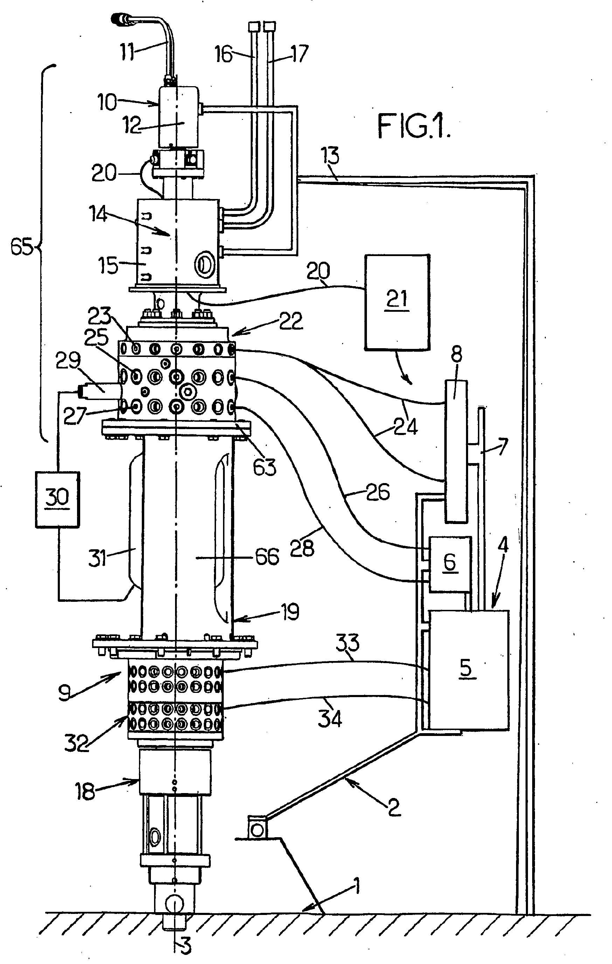

A la figure 1 des dessins annexés est illustrée en vue de côté une colonne tournante d'alimentation électrique et fluidique installée actuellement dans certaines machines de fabrication de récipients par soufflage ou étirage-soufflage produites par la Demanderesse (les parties principales d'une telle machine étant simplement esquissées de façon très schématisée à la figure 1).

La machine tournante du type carrousel comprend un bâti fixe 1 supportant un châssis tournant 2 qui est rotatif (sous l'entraînement de moyens non représentés) autour d'un axe 3 de rotation. Le châssis tournant 2 supporte plusieurs postes de travail 4 régulièrement répartis périphériquement. S'agissant plus spécifiquement, dans l'exemple considéré, d'une machine d'étirage-soufflage pour la fabrication de récipients, notamment de bouteilles, en matériau thermoplastique tel que le PET, chaque poste de travail 4 comprend notamment un moule 5, des moyens 6 de gestion du fluide de présoufflage sous relativement moyenne pression (typiquement de l'ordre de 13x10⁵ Pa) et du fluide de soufflage sous relativement haute pression (typiquement de l'ordre de 40x10⁵ Pa) et une tige 7 d'étirage mécanique du récipient en cours de soufflage, la tige 7 étant mue axialement par des moyens 8 d'actionnement pneumatique (du type vérin) sous relativement basse pression (typiquement 7x10⁵ Pa).

La machine comporte également une colonne tournante 9 d'alimentation électrique et fluidique qui s'étend coaxialement à l'axe 3 de rotation du châssis tournant et qui est propre à assurer l'alimentation électrique et la fourniture des divers fluides nécessaires au fonctionnement des postes de travail 4 à partir de sources respectives fixes.

A cet effet, la colonne tournante 9 comprend un collecteur électrique tournant 10, situé en tête de la colonne tournante 9, qui est alimenté par un câble électrique 11 fixe. De façon classique, le collecteur électrique tournant comporte des pistes, fixes ou tournantes, sur lesquelles sont en appui élastique des doigts respectivement tournants ou fixes, l'ensemble étant abrité sous un carter 12, seul visible sur la figure 1, qui est fixe et retenu par une structure anti-couple 13 (schématisée sous forme d'une potence) solidaire du bâti fixe 1.

Disposé axialement sous le collecteur électrique tournant 10 se trouve un raccord fluidique tournant 14, dont seul le carter 15, fixe et retenu par la structure anti-couple 13, est visible sur la figure 1. Le raccord fluidique tournant 14 est connecté à une source de fluide pneumatique sous relativement haute pression (en général de l'air typiquement sous 40x10⁵ Pa) par un conduit 16 et à une source de fluide pneumatique sous relativement basse pression (en pratique air à pression industrielle de 7x10⁵ Pa) par un conduit 17, les deux conduits 16, 17 étant fixes et supportés par exemple par la structure anti-couple 13.

La base 18 de la colonne tournante 9 d'alimentation, par laquelle elle repose sur le bâti fixe 1, est elle aussi fixe. La partie tournante ou rotor de la colonne tournante 9 est, sur la figure 1, désignée dans son ensemble par la référence 19.

Les alimentations des postes de travail se font de la façon suivante.

Les câbles électriques de sortie du collecteur électrique tournant 10, qui sont désignés par la référence 20, sont solidaires du rotor 19 de la colonne tournante 9 et, pour être dégagés de la structure anti-couple 13, traversent le raccord fluidique tournant 14 en étant fonctionnellement associés au rotor 19, puis, au débouché du raccord fluidique tournant 14, ils sont connectés à une armoire 21 de distribution électrique supportée par le châssis tournant affectée à l'alimentation électrique des composants électriques des postes de travail (électrovannes notamment).

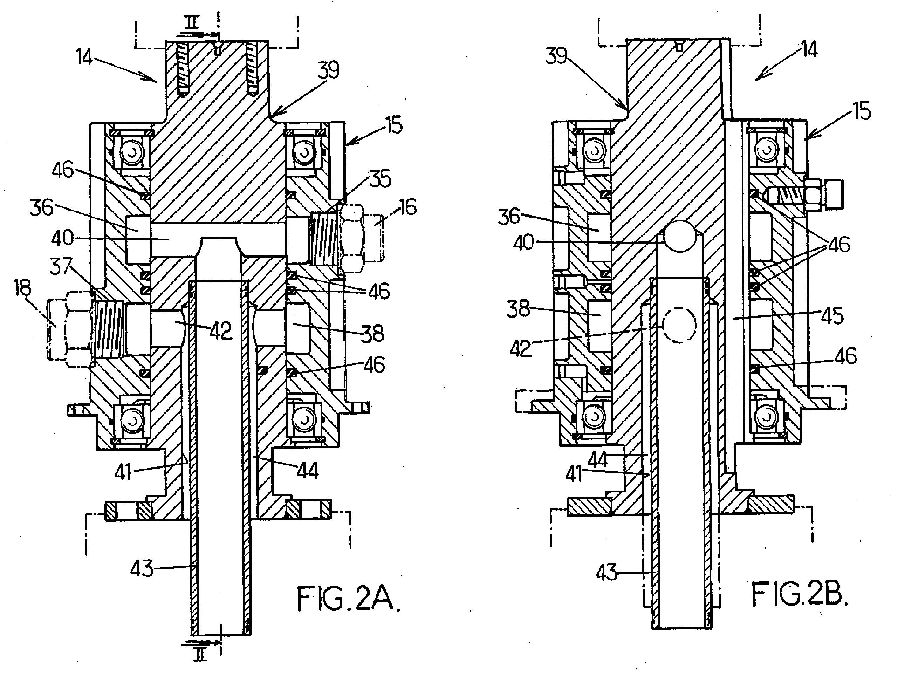

L'acheminement de fluide pneumatique en sortie du raccord fluidique tournant 14 se fait, à travers le rotor 19 agencé sous forme creuse (un exemple de constitution du raccord fluidique tournant 14 sera exposé plus loin en regard des figures 2A, 2B), en direction d'un distributeur 22 fluidique tournant situé sous le raccord fluidique tournant 14. Le distributeur 22 comporte un premier étage de raccords 23 répartis périphériquement pour la distribution du fluide pneumatique sous basse pression et raccordés en 24 aux moyens 8 d'actionnement de la tige 7 d'étirage. Le distributeur 22 comporte également un deuxième étage de raccords 25 répartis périphériquement pour la distribution du fluide pneumatique sous haute pression (soufflage) et raccordés en 26 aux moyens 6 de gestion du fluide de présoufflage/soufflage précités. Enfin, le distributeur 22 comporte également un troisième étage de raccords 27 répartis périphériquement pour la distribution du fluide pneumatique sous moyenne pression (présoufflage) et raccordés en 28 aux moyens 6 de gestion du fluide de présoufflage/soufflage précités ; le fluide sous moyenne pression (typiquement 13x10⁵ Pa) est habituellement obtenu en prélevant du fluide sous haute pression en 29 sur l'étage correspondant du distributeur, qui est détendu dans un dispositif détendeur 30 pour l'amener à la pression requise et qui est enfin stocké dans un réservoir tampon 31 (par exemple intégré dans une structure 66 du rotor 19 comme illustré à la figure 1) qui est connecté au troisième étage de raccords 27 précité.

Enfin, sous le réservoir tampon 31, le rotor comporte un distributeur 32 de liquides qui est agencé pour la distribution en 33 et 34, à chaque poste de travail, de l'eau et de l'huile nécessaires notamment pour la régulation de température des moules 5.

Un flasque d'assemblage 63 est prévu à la base du distributeur 22 pour sa solidarisation amovible à la partie sous-jacente 66 du rotor 19.

Aux figures 2A et 2B des dessins annexés, le raccord fluidique tournant 14 est montré en coupes diamétrales respectivement selon deux plans perpendiculaires. La partie extérieure fixe ou carter 15 est munie d'un premier alésage radial 35 pour l'admission du fluide sous haute pression (arrivant du conduit 16) qui débouche dans une première chambre 36 annulaire de distribution et d'une ouverture 37 radiale constituée par un second alésage, situé plus bas que le précédent, pour l'admission du fluide sous basse pression (arrivant du conduit 17) qui débouche dans une seconde chambre 38 annulaire de distribution.

A l'intérieur du carter 15 la partie tournante 39 du raccord fluidique tournant 14 (qui constitue un des éléments du rotor 19 de la colonne tournante 9) comporte un premier alésage radial 40 en regard de la première chambre 36 annulaire de distribution du carter 15 et un alésage axial 41 s'ouvrant dans ce premier alésage radial 40 et s'étendant vers le bas en direction du distributeur 22 fluidique tournant sous-jacent (visible sur la figure 1). La partie tournante 39 comporte un second alésage radial 42 en regard de la seconde chambre 38 annulaire de distribution, ledit second alésage radial 42 débouchant dans l'alésage axial 41. Enfin, un tube central 43 est monté dans l'alésage axial 41 coaxialement à celui-ci ; le tube central 43 possède un diamètre extérieur plus petit que celui de l'alésage axial 41 de manière qu'un passage 44 annulaire soit défini entre le tube central 43 et l'alésage axial 41 ; de plus l'extrémité supérieure du tube central 43 est solidarisée de façon étanche à l'alésage axial 41 dans la partie de celui-ci située entre les deux alésages radiaux 40 et 42.

Grâce à cet agencement, le tube central 43 véhicule axialement le fluide pneumatique sous haute pression délivré par le conduit 16 via la première chambre 36 annulaire de distribution et le premier alésage radial 40, tandis que le passage 44 annulaire véhicule périphériquement le fluide pneumatique sous basse pression délivré par le conduit 17 via la seconde chambre 38 et le second alésage radial 42.

Comme cela apparaît sur la figure 2B faite dans un plan de coupe perpendiculaire, la partie tournante 39 du raccord fluidique tournant 14 est également pourvu d'un alésage 45 parallèle à son axe et à l'alésage axial 41, mais décalés radialement vers la périphérie de, la partie tournante 39 de manière que, s'étendant sur approximativement toute la hauteur de la partie tournante 39, il passe à l'extérieur de l'alésage axial 41. L'alésage 45 excentré est destiné au passage du ou des câbles électriques 20 qui s'étendent de la sortie du collecteur électrique tournant 10 jusqu'à l'armoire 21 de distribution électrique, comme indiqué plus haut.

Dans certains cas, au lieu d'être pourvue d'un seul alésage 45 excentré pour le passage des câbles, la structure est pourvue de plusieurs alésages dans lesquels les câbles sont répartis.

Une colonne tournante 9 d'alimentation électrique et fluidique agencée comme il vient d'être décrit équipe actuellement un grand nombre de machines fabriquées par la Demanderesse et donne toute satisfaction sur le plan fonctionnel. Toutefois, cette colonne connue présente divers inconvénients inhérents à sa structure, et plus spécifiquement aux positions relatives du collecteur électrique tournant 10 et du raccord fluidique tournant 14.

Compte tenu de la position du raccord fluidique tournant 14 situé en dessous du collecteur électrique tournant 10, toute intervention d'entretien sur le raccord fluidique tournant 14 nécessite le démontage du collecteur électrique tournant 10 avec toutes les implications que cela entraîne (isolement électrique de la machine, déconnexion des câbles, séparation de la structure anti-couple, contrôle des connexions correctes lors du remontage, etc). Or, il s'est avéré dans la pratique courante que les interventions sur le collecteur électrique tournant 10 étaient relativement rares, tandis que le raccord fluidique tournant nécessitait des interventions régulières.

Une raison importante des interventions d'entretien est due à la nécessité de remplacer régulièrement les joints d'étanchéité 46 entre partie fixe et partie tournante qui ont une durée de vie relativement brève. La présence du ou des alésages 45 excentrés conduit à concevoir la partie tournante 39 du raccord fluidique tournant avec un diamètre relativement important (typiquement entre 110 et 150 mm sur les machines de la Demanderesse). Il s'ensuit que la vitesse linéaire relative entre partie fixe et partie tournante est élevée. Il en résulte, que les joints subissent de ce fait une usure mécanique accélérée.

De plus, cette vitesse relative élevée provoque un échauffement relativement important des joints (qui peuvent par exemple être portés à une température de l'ordre de 100°C). Cet échauffement est communiqué aux pièces métalliques et notamment au rotor qui, pour les raison exposées plus haut, est massif et donc difficile à refroidir. Cette ambiance thermique défavorable affecte notablement la durée de vie des joints.

Au surplus, les joints d'étanchéité 46 sont logés dans des gorges usinées dans la paroi du carter 15 (montage en gorges fermées). Les joints d'étanchéité 46, étant constitués en un matériau relativement rigide, doivent, pour leur mise en place, être déformés en coeur pour pouvoir être introduits dans le carter jusqu'à hauteur de leurs gorges respectives dans lesquelles ils sont ensuite expansés. Toutefois, le matériau constitutif des joints n'est pas élastique et, une fois introduits dans leurs gorges, les joints reprennent difficilement leur forme annulaire et il est alors nécessaire de procéder à une intervention manuelle pour les conformer correctement.

Il existe donc, de la part des utilisateurs, une demande pressante pour que des améliorations soient apportées à cette partie de la machine de manière à en simplifier la maintenance et à allonger les intervalles entre interventions, afin que les machines deviennent plus performantes et plus productives.

L'invention a donc pour but de proposer une colonne tournante d'alimentation à structure perfectionnée qui réponde mieux aux diverses exigences de la pratique.

A ces fins, l'invention propose une machine selon US-A-4 816 542, telle qu'exposée au préambule de la revendication 1, et qui se caractérise par les mesures techniques de la partie caractérisante de la revendication 1.

Grâce à cet agencement, le processus d'entretien du raccord fluidique tournant se trouve considérablement simplifié, puisqu'on dispose alors d'un accès direct audit raccord fluidique tournant sans qu'il soit nécessaire de démonter au préalable le collecteur électrique tournant. La durée d'une intervention d'entretien devient ainsi considérablement moins longue et moins complexe.

En outre, le ou les câbles de sortie du collecteur électrique tournant, sortant par le dessous de celui-ci, ne sont plus gênés par la structure anti-couple qui est solidarisée au carter du collecteur électrique tournant : ces câbles peuvent alors être directement raccordés à l'armoire électrique sans avoir à traverser le raccord fluidique tournant. Ainsi le raccord fluidique tournant est réalisable avec un diamètre réduit de sa partie tournante : des essais ont été menés avec succès avec un rotor du raccord fluidique tournant possédant un diamètre inférieur à 50 mm, soit un diamètre réduit dans un rapport de l'ordre de 3 par rapport à ceux utilisés antérieurement. Ce diamètre faible conduit à des vitesses linéaires réduites entre parties fixes et parties tournantes qui réduisent considérablement l'usure mécanique des joints. D'autre part, cette vitesse linéaire réduite provoque un moindre échauffement des joints, tandis que la moindre masse du rotor permet son refroidissement plus rapide : au bout du compte, il en résulte des conditions thermiques améliorées qui influent favorablement sur la durée de vie des joints.

Au bout du compte, l'intervalle entre interventions successives d'entretien peut être considérablement accru, voire multiplié de plusieurs fois. Typiquement, les dispositions selon l'invention permettent d'envisager une durée de vie des joints de l'ordre de 15 000 heures (soit environ deux années de fonctionnement de la machine).

Dans ce cas, il est avantageux de prévoir que le raccord fluidique tournant comporte un carter fixe fermé par un couvercle fixe, lequel couvercle est situé en tête de la colonne et comporte une ouverture axiale d'alimentation en fluide et coiffe l'extrémité d'un tube central axial d'un rotor, lequel tube central est en liaison fluidique avec ladite ouverture et s'étend jusqu'au distributeur de fluide.

Bien que les dispositions de l'invention puissent s'appliquer au transfert de n'importe quel type de fluide, liquide ou gazeux, une application préférée de l'invention concerne une machine à fonctionnement électrique et pneumatique et, dans ce contexte, le fluide est un gaz (notamment de l'air) sous relativement haute pression.

Dans une variante d'une telle machine dans laquelle le raccord fluidique tournant est agencé pour délivrer en outre un gaz sous relativement faible pression, on prévoit que le susdit carter fixe comporte une ouverture radiale d'alimentation en gaz sous relativement faible pression et que le rotor comporte, autour du tube central, un passage annulaire muni de lumières traversantes mettant en relation ladite ouverture radiale et ledit passage annulaire.

Dans un mode de réalisation particulièrement intéressant rendu possible par la structure précitée, le susdit couvercle définit un logement axial recevant des moyens d'étanchéité interposés entre l'extrémité du tube central et le carter fixe et est démontable pour donner accès auxdits moyens d'étanchéité. De ce fait, l'accès aux moyens d'étanchéité est rendu particulièrement aisé et leur remplacement peut être mené très rapidement. En outre, il devient possible de constituer ces moyens d'étanchéité de la manière la mieux appropriée et la plus efficace ; notamment, on peut prévoir que les moyens d'étanchéité pour le fluide sous relativement haute pression comprennent un seul joint ou un joint double comportant deux joints superposés écartés par une entretoise, de manière à obtenir une étanchéité fiable en présence du fluide sous relativement haute pression. On notera que l'agencement proposé procure un accès facile et rapide aux moyens d'étanchéité (montage à gorge ouverte) et le ou les joints peuvent être mis en place axialement sans qu'il soit besoin de les déformer.

On notera également que la structure du raccord fluidique tournant agencé conformément à l'invention offre la faculté de réaliser les moyens d'étanchéité sous forme d'un joint à garniture sèche.

Comme cela ressort des explications qui précèdent, les dispositions de l'invention qui viennent d'être exposées peuvent trouver une application particulièrement intéressante, bien que non exclusive, dans une machine tournante agencée pour le moulage de récipients en matériau thermoplastique, notamment en PET, par soufflage ou étirage-soufflage d'ébauches dans des moules répartis périphériquement qui sont raccordés à ladite colonne d'alimentation tournante pour leur alimentation électrique et leur alimentation pneumatique en fluide de soufflage sous relativement moyenne pression pour le présoufflage, en fluide sous relativement haute pression pour le soufflage et en fluide sous relativement basse pression pour la commande de déplacement d'une tige d'étirage. En outre, on peut envisager de pourvoir la structure fluidique de passages pour un retour de fluide de soufflage vers un circuit de récupération d'air, notamment à destination du circuit pneumatique sous moyenne pression utilisé en particulier pour le présoufflage.

Pour fixer les idées, on peut indiquer que dans l'application typique aux machines de soufflage, le changement des moyens d'étanchéité du circuit d'air de soufflage sous relativement haute pression peut, dans une machine agencée selon l'invention, être mené à bien en une demi-heure environ, contre environ quatre heures dans les machines actuelles.

On soulignera également que la mise en oeuvre des dispositions conformes à l'invention, avec inversion de position du raccord fluidique tournant et du collecteur électrique tournant, ne conduit pas à une remise en cause de la géométrie du flasque de montage du bloc supérieur de la colonne (formé par l'ensemble collecteur électrique tournant-raccord fluidique tournant) sur le distributeur fluidique. Le nouvel ensemble agencé selon l'invention peut donc être mis en place sur une machine préexistante en lieu et place de l'ensemble antérieur.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :
- la figure 1 est une vue schématique très simplifiée d'une machine tournante visée par l'invention avec une colonne tournante d'alimentation électrique et fluidique de l'état de la technique montrée de façon relativement détaillée ;
- les figures 2A et 2B sont deux vues de côté, en coupes diamétrales dans deux plans perpendiculaires, du raccord fluidique tournant de l'état de la technique mis en oeuvre dans la machine de la figure 1 ;
- la figure 3 est une vue schématique montrant de façon simplifiée la partie haute, agencée conformément à l'invention, de la colonne tournante de la machine de la figure 1 ;
- la figure 4 est une vue en coupe diamétrale d'un raccord fluidique tournant agencé conformément à l'invention pour l'équipement de la machine de la figure 3 ; et
- la figure 5 est une demi-vue partielle en coupe montrant une variante de réalisation d'une partie du raccord fluidique tournant de la figure 4.

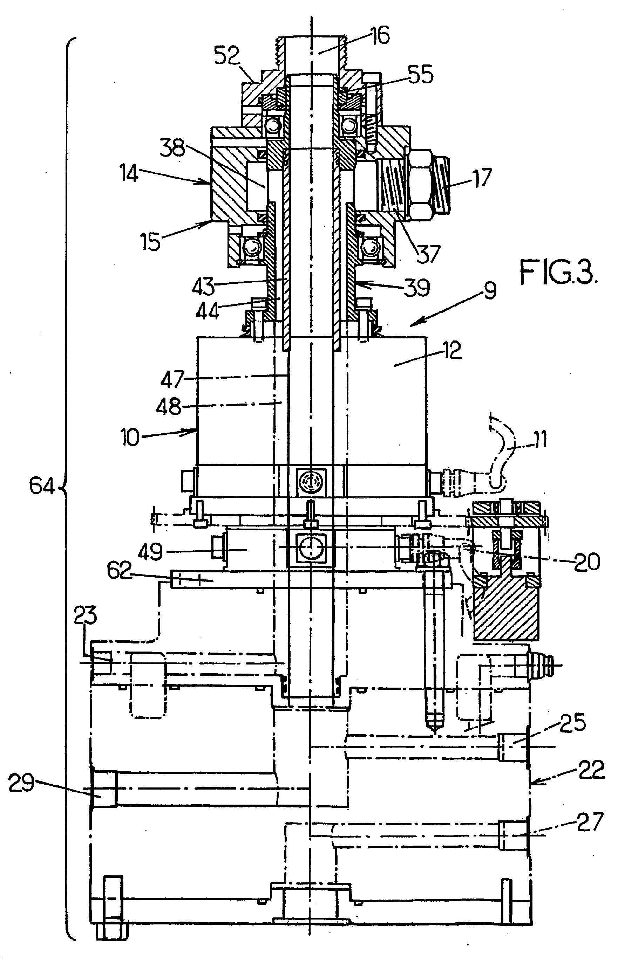

La figure 3 montre la partie haute de la colonne tournante 9 agencée conformément à l'invention, les mêmes organes ou parties qu'aux figures 1, 2A et 2B étant désignés par les mêmes références numériques.

Conformément à l'invention, les situations respectives du collecteur électrique tournant 10 et du raccord fluidique tournant 14 sont inversées, le raccord fluidique tournant 14 étant disposé en haut, en tête de la colonne tournante 9, tandis que le collecteur électrique tournant 10 est disposé en dessous. En particulier il est avantageux que le collecteur électrique tournant 10 soit disposé entre le raccord fluidique tournant et le distributeur 22 fluidique tournant, comme montré à la figure 3. Dans ces conditions, le collecteur électrique tournant 10 doit être agencé sous forme annulaire, de manière que sa partie centrale reste disponible pour l'acheminement des fluides (conduit tubulaire central 47 prolongeant le tube central 43, passage annulaire 48 prolongeant le passage 44) depuis le raccord fluidique tournant 14 jusqu'au distributeur 22 fluidique tournant. Pour le reste, on notera que le câble électrique 11 fixe d'alimentation est raccordé au carter 12 (ici de façon radiale), tandis que le câble électrique 20 tournant de sortie du collecteur électrique tournant 10 sort radialement de la partie tournante 49 du collecteur électrique tournant 10 qui est solidarisée au distributeur 22 fluidique tournant.

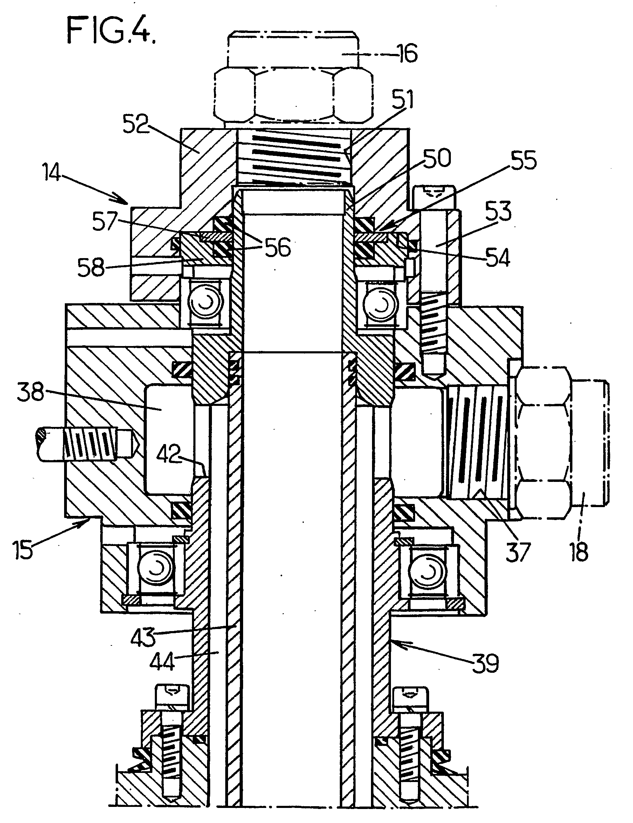

Le raccord fluidique tournant 14 est conformé comme montré de façon plus détaillée à la figure 4 sur laquelle sont reprises les mêmes références numériques pour désigner des organes identiques à ceux des figures 2A et 2B. La partie tournante 39, n'ayant plus à être agencée pour le passage du ou des câbles de sortie du collecteur électrique tournant 10, peut être réalisée sous la forme générale d'un élément tubulaire de faible diamètre recevant centralement le tube central 43 avec formation du passage 44 annulaire. L'extrémité supérieure 50 de la partie tournante 39 est conformée sous forme d'un manchon ayant un diamètre réduit (sensiblement identique à celui du tube central 43).

La partie supérieure du carter 15 est munie d'une ouverture 51 axiale qui débouche à proximité immédiate de l'orifice de l'extrémité supérieure 50, en forme de manchon, de la partie tournante 39, et à laquelle est raccordé le conduit 16 d'alimentation en fluide, typiquement en gaz (air) sous haute pression dans l'exemple illustré d'une machine de moulage par soufflage ou étirage-soufflage.

De façon pratique, la partie supérieure du carter 15 est agencée sous forme d'un couvercle 52 qui est propre à coiffer l'extrémité supérieure 50 en forme de manchon de la partie tournante 39 et qui est fixé de façon amovible (par exemple par boulonnage 53) au carter 15.

Le couvercle 52 peut être intérieurement conformé pour définir un logement 54 axial de réception de moyens d'étanchéité 55 assurant l'étanchéité vis-à-vis du fluide sous pression relativement élevée entre l'extrémité supérieure 50 en forme de manchon de la partie tournante 39 et le couvercle 52. Il est possible de constituer les moyens d'étanchéité 55 de façon particulièrement efficace, avec deux joints 56 séparés par une entretoise 57 intermédiaire, l'ensemble étant bloqué dans le logement 54 à l'aide d'une bague de blocage 58.

Compte tenu de la configuration donnée au couvercle 52, l'accès aux moyens d'étanchéité 55 est facile une fois le couvercle démonté et le remplacement des joints 56 se fait sans qu'il soit besoin de les déformer (montage en gorge ouverte).

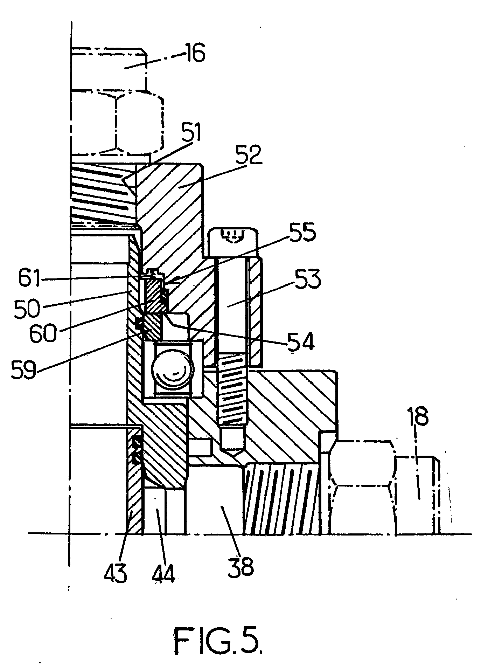

L'agencement qui vient d'être décrit se prête également à la mise en oeuvre de moyens d'étanchéité à garniture sèche comme illustré à la figure 5, laquelle correspond pour le reste à la demi-vue de droite de la partie supérieure de la figure 4. Les deux joints 56 de la figure 4 sont ici remplacés par un système d'étanchéité à durée de vie plus longue comprenant une garniture 59 annulaire, par exemple une glace tournante, portée par la face externe de l'extrémité supérieure 50, en forme de manchon, et en saillie sur celle-ci, et une seconde garniture 60, complémentaire de la première, par exemple un joint ou une glace fixe, laquelle est supportée au-dessus de la garniture 59, par la face interne du logement 54 du couvercle 52, des moyens 61, tels qu'un ressort repoussant la seconde garniture 60 au contact de la garniture 59 annulaire. A l'étanchéité radiale procurée par les joints 56 est substituée une étanchéité axiale entre la seconde garniture 60 et la garniture 59 annulaire.

On soulignera que le rotor de la colonne tournante 9, qui a été désigné plus haut par la référence 19, est en fait constitué par l'assemblage rigide, bout à bout, des parties tournantes de chacun des dispositifs constitutifs de la colonne tournante 9. Ainsi, comme on le voit à la figure 3, la partie tournante 39 du raccord fluidique tournant 14 est solidaire (par exemple par boulonnage comme représenté) de la partie tournante 49 du collecteur électrique tournant 10, laquelle est elle-même solidarisée (par exemple par boulonnage comme représenté) au distributeur 22 fluidique tournant. Dans le contexte des dispositions conformes à l'invention exposées ci-dessus, il est possible de donner au flasque d'assemblage 62 de la partie tournante 49 du collecteur électrique tournant 10 une configuration (forme, dimensions, positions des perçages pour les boulons de montage) analogue à la configuration que présente actuellement le flasque d'assemblage 63 prévu sur le rotor du raccord fluidique tournant 14 (voir figure 1). Ainsi, il devient possible que l'ensemble 64 formé selon l'invention par le raccord fluidique tournant 14, par le collecteur électrique tournant 10 que le raccord fluidique tournant 14 surmonte et par le distributeur 22 soit substitué à l'ensemble 65 formé, dans les machines antérieures, par le collecteur électrique tournant 10, par le raccord fluidique tournant 14 que le collecteur électrique tournant 10 surmonte et par le distributeur 22 : un ensemble 64 conforme à l'invention peut alors être monté sur une machine déjà en service en lieu et place de l'ensemble 65 existant.

Comme cela ressort des explications qui précèdent, les dispositions de l'invention qui viennent d'être exposées peuvent trouver une application particulièrement intéressante, bien que non exclusive, dans une machine tournante telle qu'illustrée à la figure 1 agencée pour le moulage de récipients en matériau thermoplastique, notamment en PET, par soufflage ou étirage-soufflage d'ébauches dans des moules 5 répartis périphériquement qui sont raccordés à ladite colonne tournante 9 d'alimentation pour leur alimentation électrique et leur alimentation pneumatique en fluide de soufflage sous moyenne pression pour le présoufflage, en fluide sous haute pression pour le soufflage et en fluide sous basse pression pour la commande de déplacement d'une tige 7 d'étirage.

## Revendications

1. Machine tournante du type carrousel comportant:
- un châssis tournant (2) rotatif autour d'un axe (3) de rotation,
- plusieurs postes de travail (4) supportés par le châssis tournant (2),
- une colonne tournante (9) d'alimentation électrique et fluidique coaxiale à l'axe (3) de rotation du châssis tournant,
- au moins un collecteur électrique tournant (10), prévu sur ladite colonne tournante (9) et connecté à une source fixe d'alimentation électrique, pour l'alimentation électrique desdits postes de travail (4), et
- au moins un raccord fluidique tournant (14), prévu sur ladite colonne tournante (9) et connecté à une source fixe de fluide, pour l'alimentation fluidique desdits postes de travail (4),
le raccord fluidique tournant (14) étant situé en tête de la colonne tournante (9), au-dessus du collecteur électrique tournant (10), et étant agencé avec une connexion axiale à un conduit (16) d'alimentation en fluide,
ce grâce à quoi le raccord fluidique tournant (14) est réalisable avec un diamètre réduit de sa partie tournante (39) conduisant à des vitesses linéaires réduites entre ses parties fixes et tournantes, la machine tournante comportant en outre au moins un distributeur (22) fluidique tournant, prévu sur ladite colonne tournante (9) et connecté audit raccord fluidique tournant (14), pour la distribution sélective de fluide auxdits postes de travail (4), **caractérisée**
**en ce que** le distributeur (22) fluidique tournant est situé sur la colonne tournante (9) en dessous du collecteur électrique tournant (10), et
**en ce que** le collecteur électrique tournant (10) est agencé annulairement et définit un passage central axial pour le fluide circulant du raccord fluidique tournant (14) vers le distributeur (22) fluidique tournant.

2. Machine selon la revendication 1, **caractérisée en ce que** le raccord fluidique tournant (14) comporte un carter (15) fixe fermé par un couvercle (52) fixe, lequel couvercle (52) est situé en tête de la colonne tournante (9), comporte une ouverture (51) axiale d'alimentation en fluide et coiffe l'extrémité supérieure (50) d'un tube central (43) axial de la partie tournante (39) du raccord fluidique tournant (14), lequel tube central (43) est en liaison fluidique avec ladite ouverture (51) et s'étend jusqu'au distributeur (22) fluidique tournant.

3. Machine selon l'une quelconque des revendications 1 et 2, **caractérisée en ce que** le fluide est un gaz sous relativement haute pression.

4. Machine selon l'une quelconque des revendications 1 à 3, dans laquelle le raccord fluidique tournant (14) est agencé pour délivrer en outre un gaz sous relativement faible pression, **caractérisée en ce que** le susdit carter (15) fixe comporte une ouverture (37) radiale d'alimentation en gaz sous relativement faible pression et **en ce que** la partie tournante (39) du raccord fluidique tournant (14) comporte, autour du tube central (43), un passage (44) annulaire mis en relation avec ladite ouverture (37) radiale par l'intermédiaire d'un alésage radial (42).

5. Machine selon l'une quelconque des revendications 1 à 4, **caractérisée en ce que** le susdit couvercle (52) définit un logement (54) axial recevant des moyens d'étanchéité (55) interposés entre l'extrémité du tube central (43) et le carter (15) fixe et est démontable pour donner accès auxdits moyens d'étanchéité (55).

6. Machine selon la revendication 5, **caractérisée en ce que** les moyens d'étanchéité (55) comprennent un joint double comportant deux joints (56) superposés écartés par une entretoise (57).

7. Machine selon la revendication 5, **caractérisée en ce que** les moyens d'étanchéité (55) comprennent un joint à garniture (59-61) sèche.

8. Machine tournante agencée pour le moulage de récipients en matériau thermoplastique, notamment en PET, par soufflage ou étirage-soufflage d'ébauches dans des moules (5) répartis périphériquement qui sont raccordés à ladite colonne tournante (9) d'alimentation pour leur alimentation électrique et leur alimentation pneumatique en fluide de soufflage sous relativement moyenne pression pour le présoufflage, en fluide sous relativement haute pression pour le soufflage et en fluide sous relativement basse pression pour la commande de déplacement d'une tige (7) d'étirage, **caractérisée en ce qu'**elle est constituée selon l'une quelconque des revendications 1 à 7.

## Patentansprüche

1. Karussellartige umlaufende Maschine mit:
- einem Drehgestell (2), das um eine Rotationsachse (3) drehbar ist,
- mehreren Arbeitsstationen (4), die von dem Drehgestell (2) getragen werden,
- einer drehbaren Strom- und Fluidversorgungssäule (9), die koaxial zu der Rotationsachse (3) des Drehgestells angeordnet ist,
- mindestens einem drehbaren elektrischen Kollektor (10), der an der drehbaren Säule (9) vorgesehen ist und zur Stromversorgung der Arbeitsstationen (4) mit einer festen Stromversorgungsquelle verbunden ist, und
- mindestens einem drehbaren Fluidanschluss (14), der an der drehbaren Säule (9) vorgesehen ist und zur Fluidversorgung der Arbeitsstationen (4) mit einer festen Fluidquelle verbunden ist, und
wobei sich der drehbare Fluidanschluss (14) oben an der drehbaren Säule (9), über dem drehbaren elektrischen Kollektor (10) befindet und mit einer axialen Verbindung zu einer Fluidversorgungsleitung (16) angeordnet ist,
wodurch der drehbare Fluidanschluss (14) mit einem verkleinerten Durchmesser seines drehbaren Teils (39) realisierbar ist, was zu reduzierten linearen Geschwindigkeiten zwischen seinen festen und drehbaren Teilen führt, wobei die umlaufende Maschine ferner mindestens einen drehbaren Fluidverteiler (22) aufweist, der an der drehbaren Säule (9) vorgesehen ist und zur selektiven Verteilung von Fluid an die Arbeitsstationen (4) mit dem drehbaren Fluidanschluss (14) verbunden ist, **dadurch gekennzeichnet, dass** sich der drehbare Fluidverteiler (22) an der drehbaren Säule (9) unter dem drehbaren elektrischen Kollektor (10) befindet, und
der drehbare elektrische Kollektor (10) ringförmig angeordnet ist und einen zentralen axialen Durchlass für das Fluid definiert, das von dem drehbaren Fluidanschluss (14) zu dem drehbaren Fluidverteiler (22) strömt.

2. Maschine nach Anspruch 1, **dadurch gekennzeichnet, dass** der drehbare Fluidanschluss (14) ein festes Gehäuse (15) aufweist, das durch einen festen Deckel (52) verschlossen wird, der sich oben an der drehbaren Säule (9) befindet, und eine axiale Fluidversorgungsöffnung (51) aufweist und das obere Ende (50) eines axialen zentralen Rohrs (43) des drehbaren Teils (39) des drehbaren Fluidanschlusses (14) bedeckt, wobei das zentrale Rohr (43) in Fluidverbindung mit der Öffnung (51) steht und sich zu dem drehbaren Fluidverbinder (22) erstreckt.

3. Maschine nach einem der Ansprüche 1 bis 2, **dadurch gekennzeichnet, dass** das Fluid ein Gas unter relativ hohem Druck ist.

4. Maschine nach einem der Ansprüche 1 bis 3, wobei der drehbare Fluidanschluss (14) so angeordnet ist, dass er außerdem ein Gas unter relativ niedrigem Druck liefert, **dadurch gekennzeichnet, dass** das oben genannte feste Gehäuse (15) eine radiale Öffnung (37) zur Versorgung mit einem Gas unter relativ niedrigem Druck aufweist und dass das drehbare Teil (39) des Fluidanschlusses (14) um das zentrale Rohr (43) herum einen ringförmigen Durchlass (44) aufweist, der mittels einer radialen Bohrung (42) mit der Öffnung (37) verbunden ist.

5. Maschine nach einem der Ansprüche 1 bis 4, **dadurch gekennzeichnet, dass** der oben genannte Deckel (52) eine axiale Aufnahme (54) definiert, die zwischen dem Ende des zentralen Rohrs (43) und dem festen Gehäuse (15) angeordnete Dichtungsmittel (55) aufnimmt, und abnehmbar ist, um Zugang zu den Dichtungsmitteln (55) zu gewähren.

6. Maschine nach Anspruch 5, **dadurch gekennzeichnet, dass** die Dichtungsmittel (55) eine Doppeldichtung mit zwei übereinanderliegenden, durch ein Distanzstück (57) voneinander beabstandeten Dichtungen (56) umfassen.

7. Maschine nach Anspruch 5, **dadurch gekennzeichnet, dass** die Dichtungsmittel (55) eine Trockendichtung (59-61) umfassen.

8. Umlaufende Maschine, die für das Formen von Behältern aus thermoplastischem Material, insbesondere aus PET, durch Blasen oder Streckblasformen von Rohlingen in Formen (5) angeordnet ist, die umfangmäßig verteilt sind und mit der drehbaren Versorgungssäule (9) verbunden sind, um mit Strom versorgt zu werden und pneumatisch mit Blasfluid unter relativ durchschnittlichem Druck für das Vorblasen, mit Blasfluid unter relativ hohem Druck für das Blasen und mit Blasfluid unter relativ niedrigem Druck für die Steuerung der Bewegung einer Reckstange (7) versorgt zu werden, **dadurch gekennzeichnet, dass** sie nach einem der Ansprüche 1 bis 7 gebildet ist.

## Claims

1. Rotating machine of the carousel type, comprising:
- a rotating frame (2) rotatable about an axis (3) of rotation,
- a plurality of workstations (4) supported by the rotating frame (2),
- a rotating electricity and fluid supply column (9), coaxial with the axis (3) of rotation of the rotating frame,
- at least one rotating electric collector (10), provided on said rotating column (9) and connected to a fixed electrical power source, for supplying electricity to said workstations (4), and
- at least one rotating fluid connection (14), provided on said rotating column (9) and connected to a fixed fluid source, for supplying fluid to said workstations (4),
the rotating fluid connection (14) being located at the top of the rotating column (9), above the rotating electric collector (10), and being designed with an axial connection to a pipe (16) for the supply of fluid,
as a consequence of which the rotating fluid connection (14) can be made with a smaller diameter of its rotating part (39), resulting in lower linear velocities between its fixed and rotating parts, the rotating machine additionally having at least one rotating fluid distributor (22), provided on said rotating column (9) and connected to said rotating fluid connection (14), for the selective distribution of fluid to said workstations (4), **characterized in that** the rotating fluid distributor (22) is located on the rotating column (9) below the rotating electric collector (10), and
**in that** the rotating electric collector (10) is designed in annular form and delimits an axial central passage for the fluid flowing from the rotating fluid connection (14) toward the rotating fluid distributor (22).

2. Machine according to Claim 1, **characterized in that** the rotating fluid connection (14) has a fixed casing (15) closed by a fixed cover (52), this cover (52) is located at the top of the rotating column (9), has an axial opening (51) for the supply of fluid and fits over the upper end (50) of an axial central tube (43) of the rotating part (39) of the rotating fluid connection (14), this central tube (43) is in fluid communication with said opening (51) and extends to the rotating fluid distributor (22).

3. Machine according to either of Claims 1 and 2, **characterized in that** the fluid is a gas under relatively high pressure.

4. Machine according to any one of Claims 1 to 3, in which the rotating fluid connection (14) is designed to additionally deliver a gas under relatively low pressure, **characterized in that** the aforesaid fixed casing (15) has a radial opening (37) for the supply of gas under relatively low pressure and **in that** the rotating part (39) of the rotating fluid connection (14) has, around the central tube (43), an annular passage (44) made to communicate with said radial opening (37) via a radial bore (42).

5. Machine according to any one of Claims 1 to 4, **characterized in that** the aforesaid cover (52) delimits an axial housing (54) which receives sealing means (55) interposed between the end of the central tube (43) and the fixed casing (15), and is removable to allow access to said sealing means (55).

6. Machine according to Claim 5, **characterized in that** the sealing means (55) comprise a double seal having two superimposed seals (56) separated by a spacer (57).

7. Machine according to Claim 5, **characterized in that** the sealing means (55) comprise a dry gasket seal (59-61).

8. Rotating machine designed for molding containers from thermoplastic material, particularly PET, by blow-molding or stretch-blowing preforms in peripherally distributed molds (5) which are connected to said rotating supply column (9) for their supply with electricity and with pneumatic blowing fluid under relatively medium pressure for preblowing, fluid under relatively high pressure for blowing, and fluid under relatively low pressure for moving a stretching rod (7), **characterized in that** it is constructed according to any one of Claims 1 to 7.
